# EUROPEAN PATENT SPECIFICATION

(11) **EP 0 538 226 B1**
(45) Date of publication and mention of the grant of the patent: **29.03.1995**
(21) Application number: 92850243.4
(22) Date of filing: 12.10.1992
(51) Int. Cl.: A01K 1/12

(54) **A device for simplifying milking of animals**
Vorrichtung zur Vereinfachung des Melkens von Tieren
Installation pour simplifier la traite des bêtes

(30) Priority: 14.10.1991 SE 9102985
(43) Date of publication of application: 21.04.1993
(73) Proprietor: HAMMARS VERKSTAD AB, S-790 20 Grycksbo (SE)
(72) Inventor: Hammar, Sune, S-790 20 Grycksbo (SE)
(74) Representative: Bjerkén, Jarl Hakan

(56) References cited:
- DE-A- 3 327 187
- FR-A- 2 348 648
- FR-A- 2 605 841
- US-A- 3 828 733
- US-A- 4 006 712
- US-A- 4 006 712

## Description

### FIELD OF THE INVENTION AND PRIOR ART

This invention relates to a device for facilitating milking of animals, especially milk-cows, comprising a standing surface for the animals.

Milking is today carried out in several essentially different modes. A first mode implies that the milking is carried out on animals tied in stall cow-houses. The cows and the milker stand at the same level and the milker has to stand bowed or sit on a primitive chair during the milking. The body position of the milker results in severe stresses in primarily the knees but also the back and the shoulders.

A second mode implies that the animals are milked batch wise as they are driven to a milk shed arranged separately. The milk place is arranged so that the cows are located at normal floor level while the milker stands lowered into a so called milk hole so as to obtain a more comfortable working position. The purpose of the milk hole is that the milker shall be spared from bending downwardly so as to manage the milking.

Problems are caused in a milk hole since the depth of the hole is adapted to a person with a certain tallness and body constitution. Taller or shorter persons are getting increased stresses in their shoulders and the back. Other disadvantages of the conventional milk hole are considerable costs for digging and concreting, especially when the ground conditions are unsuitable. Furthermore, waste water has to be pumped out of the hole after clean flushing thereof. Such milk holes mean in winter very unpleasant working climate as a consequence of the fact that cold air from the external walls, windows and doors flows downwardly into the hole. Furthermore, it is underlined that when a group of animals is ready milked and shall be driven away from the milk hole and then the next group shall be driven to the milk hole, the milker has to go up and down in the stairs.

US-A-3 828 733 discloses a device having the nature of a portable milking stand, which in its entirety is placable on a floor. Although that eliminates some of the disadvantages of the conventional milk hole, others remain. For example, the standing surfaces for the animals are located at a specific elevation above the floor so that the working conditions for the operators will depend upon their lengths.

A third milking mode is described in US-A-4 006 712, where milking stations for receiving an individual animal comprise vertically movable platforms. The milking stations are arranged in pairs with operator spaces between adjacent pairs of milking stations. An animal entry area is elevated relatively to an animal exit area. The platform is capable of movement between a milking position at the level of the entry area and an exit position at the level of the exit area. Milking is intended to be carried out when the platforms are at the entry area level. The device according to the US patent involves the disadvantage that different floor levels will have to be provided and furthermore, the device is relatively costly with several individually movable platforms. In addition, since the operator is supposed to stand on the exit area level and the animals to be milked are standing at the entry area level, short and tall persons will have to carry out working operations at the same level, which is associated to the disadvantages already discussed.

### SUMMARY OF THE INVENTION

The object of the present invention is to show ways to reduce the disadvantages mentioned above. Accordingly, a device is to be obtained which gives the milking person as good working conditions as possible. In this connection, the invention starts from the prior art reflected in the pre-characterizing part of claim 1 and corresponding to US-A-4 006 712.

This object is in accordance with the invention primarily obtained by means of the features of claim 1. Accordingly, conditions for adjusting the support arrangement and thereby the animals standing on the standing surface thereof to such a level that the milker gets optimal working conditions independent of whether he is short or tall are thereby created.

The milker gets by the characteristics mentioned in claim 2 optimal working conditions as a consequence of the free space above the standing surface.

A rear edge of the standing surface with zigzag shape in accordance with claim 3, wherein it is a condition that this zigzag shape is adapted to the cows standing obliquely on the standing surface, makes it possible for the milker to extend as little as possible over the standing surface when he shall reach to the animals. The zigzag shape of the rear edge of the standing surface is as already indicated particularly advantageous when arrangements restricting the movements of the animals are arranged to cause the animals to stand side by side and obliquely with respect to the longitudinal direction of the standing surface in their milking positions.

When the power means or vertically adjusting means are located in accordance with claim 5 they will be located under the standing surface and thereby be out of the way and not constituting an obstacle to the milker. A support arrangement with L-shape as laterally seen in accordance with claim 6 makes it possible to make a substantially horizontal leg of said L forming the standing surface comparatively low and with a low space demand, while guide means required for good stability of the support arrangement according to claim 7 may be a part of a substantially vertical leg of said L, which guide means are movable along posts or columns.

It is preferred that the power means in accordance with claim 11 are constituted by piston cylinder mechanisms with multi-step pistons. Such mechanisms combine a very high height of lift and a very low height in the compressed position, by which the standing surface may be lowered comparatively far towards the underlayer surface in spite of the piston cylinder mechanisms located under the standing surface.

Further preferred developments of the invention appear from the rest of the dependent claims.

### BRIEF DESCRIPTION OF THE DRAWINGS

With reference to the appended drawings, below follows a specific description of an embodiment of the invention cited as an example.

In the drawings:
Fig 1 is a schematic and perspective view illustrating a part of the device according to the invention with animals located thereon and in the lowered position,
Fig 2 is a view corresponding to Fig 1 but illustrating the device from above,
Fig 3 is a view of the device from the right in Fig 2,
Fig 4 is a perspective view of the actual support arrangement with the arrangements restricting the movements of the animals removed, and
Fig 5 is a perspective view of the support arrangement according to Fig 4 seen from the opposite direction.

### DETAILED DESCRIPTION OF A PREFERRED EMBODIMENT

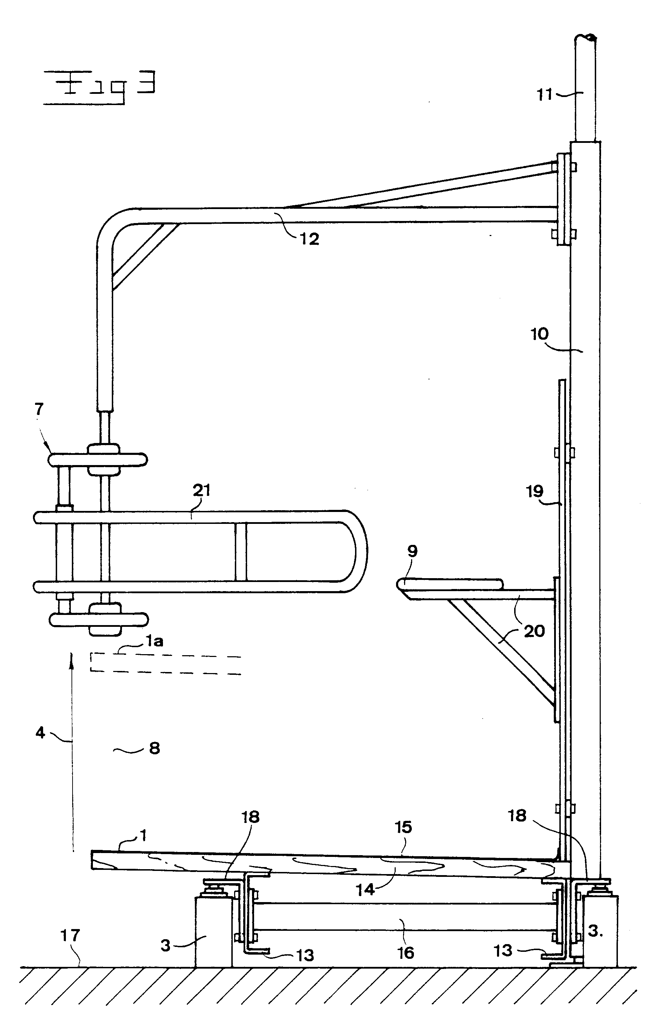

The device according to the invention for facilitating milking of animals comprises a standing surface for the animals. This standing surface 1 is arranged on a vertically adjustable support arrangement, which is provided with power means 3 for producing power for adjusting the support arrangement 2 to a level suitable for milking. It is illustrated by the arrow 4 in Fig 3 how the standing surface 1 by means of the power means 3 is imagined to have been lifted to the indicated position 1a. Thus, the operator may raise and lower, respectively, the entire support arrangement 2 with the animals located thereon to the level optimum for milking, i.e. so that the operator may comfortably reach the teats and udders of the animals and apply the milking equipment.

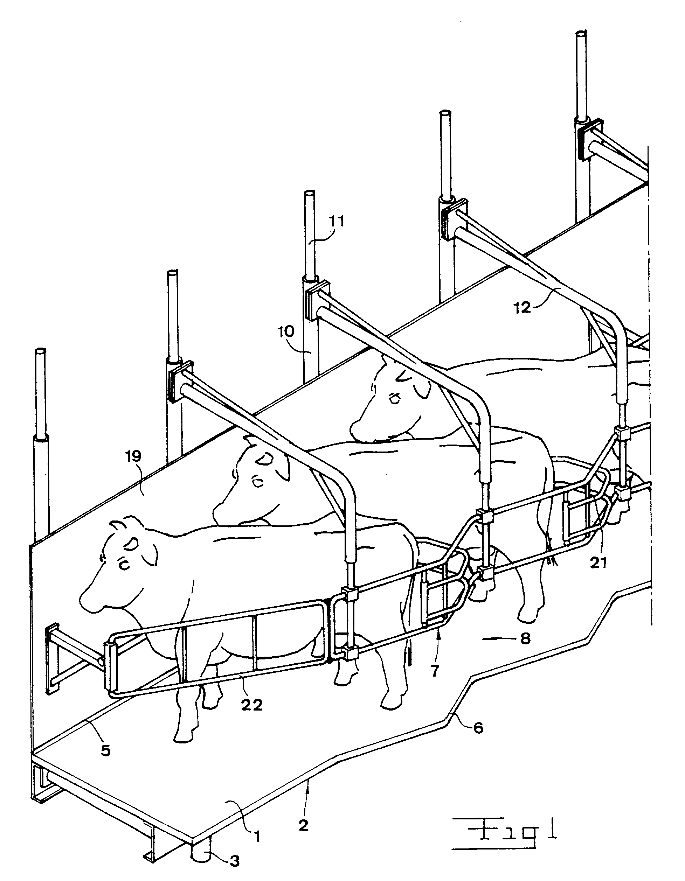

The standing surface 1 has a front edge 5 and a rear edge 6, as indicated in Fig 1. The animals have in their positions intended for milking their rear parts closest to the rear edge 6. Arrangements 7 restricting the movements of the animals rearwardly are arranged above the standing surface and in a region of the rear edge 6 thereof. There is a free space 8 between the standing surface 1 and the movement restricting arrangements 7 located thereabove, which offers a good accessibility to the teats of the animals.

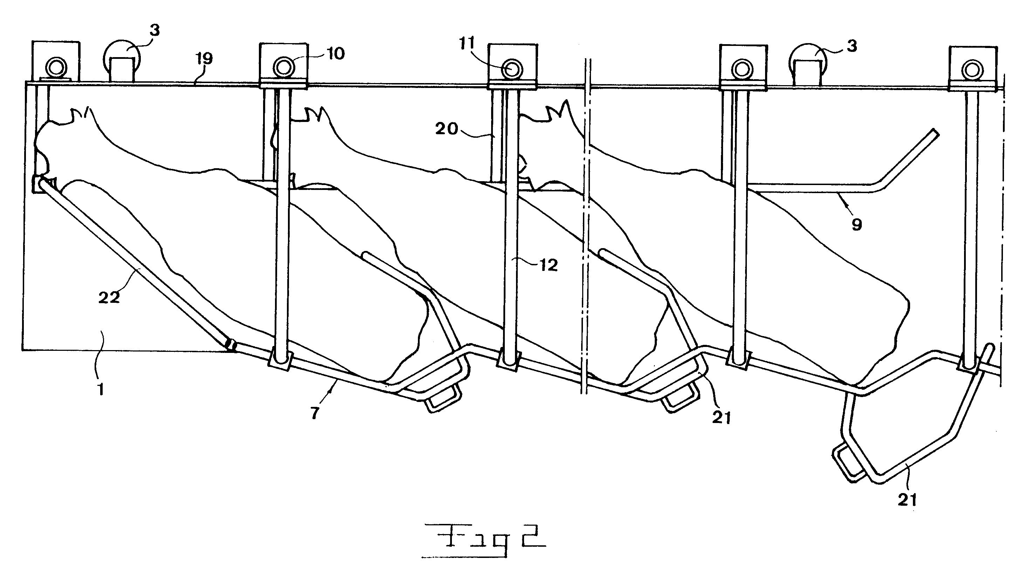

The rear edge 6 of the standing surface 1 has a zigzag shape. The standing surface has more exactly an elongated shape and it is adapted to receive several animals. The arrangement already mentioned restricting the movements of the animals rearwardly, which partially also function laterally restrictingly with respect to the animals, cause through assistance by arrangements 9 restricting the movements of the animals forwardly the animals to stand side by side and obliquely with respect to the direction of the standing surface in their milking positions, as it appears from Figs 1 and 2. The zigzag shape already mentioned of the rear edge 6 of the standing surface is adapted to the displaced position of the rear parts of the animals, so that the operator comes comparatively close to the udders of the animals.

Power means or vertically adjusting means 3 located at least in the region of the portion of the standing surface located at the rear parts of the animals are arranged at a level below the standing surface 1 so as to act upon the support arrangement 2 there. The support arrangement 2 has as laterally seen a substantially L-shape, said standing surface 1 forming the upper surface of a substantially horizontal leg of said L. A substantially vertical leg of said L comprises guide means 10, which are movable along posts or columns 11. These posts or columns 11 are intended to be steady and permanently secured between the floor and the ceiling in the cow-house in question, although it would also be possible that they extend freely out from either the floor or the ceiling. As it appears from the Figures in the drawings there are several separate guide means 10, which in the example are intended to have the character of tube sleeves arranged to externally grip around the posts or columns 11. The substantially vertical leg of said L is intended to function as carrier for means 12, which in their turn constitute carriers for the movement restricting arrangements 7. The carrying means 12 are more exactly intended to extend over the animals and downwardly therebehind, so that accordingly the movement restricting arrangements 7 will hang down from the carrying means 12 at a level above the standing surface 1, said free space 8 previously mentioned separating the arrangements 7 and the standing surface 1. The carrying means 12 are in the example attached to the guide means 10, more exactly at the upper ends thereof. Furthermore, the carrying means 12 have suitably the character of carrying loops with a substantially horizontal first leg and a leg extending vertically downwardly and carrying the arrangements 7.

The arrangements 9 restricting the movements of the animals forwardly are also arranged on the substantially vertical leg of said L.

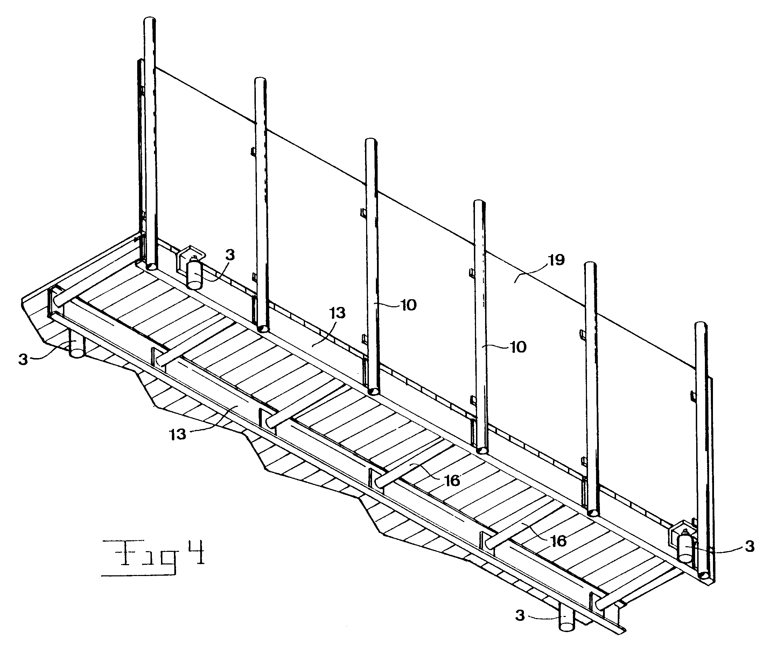

The support arrangement 2 comprises at least two longitudinal beams 13, on which elements 14, 15 forming the standing surface are arranged, and stiffening means 16 extending between these beams. As appears from Fig 4, the stiffening means 16 are separated in the longitudinal direction of the support arrangement 2. The stiffening means 16 have at their ends plate elements, by means of which the stiffening means are bolted to the beams 13, which in the example are illustrated as having a U-shape in cross section, in which the ribs of these U's are directed towards each other. The stiffening means 16 could of course also be secured to the beams 13 by welding.

The power means 3 are suitably of a type varying its length and they act between the underlayer 17, normally the floor of the cow-house, and these beams 13 or, as in the example, components 18 secured thereto. Such components 18 may in the practice have the character of angle pieces, on one rib of which the power means 3 act, while the other ribs are bolted or otherwise attached to the beams 13, more exactly their web.

The power means 3 are preferably constituted by piston cylinder mechanisms with multi-step pistons, so that on one hand the length of the power means in the lowered position of the support arrangement 2 is a minimum but on the other the support arrangement 2 can be lifted by means of the means 3 a distance being at least greater and suitably several times greater than the shortest length of the power means.

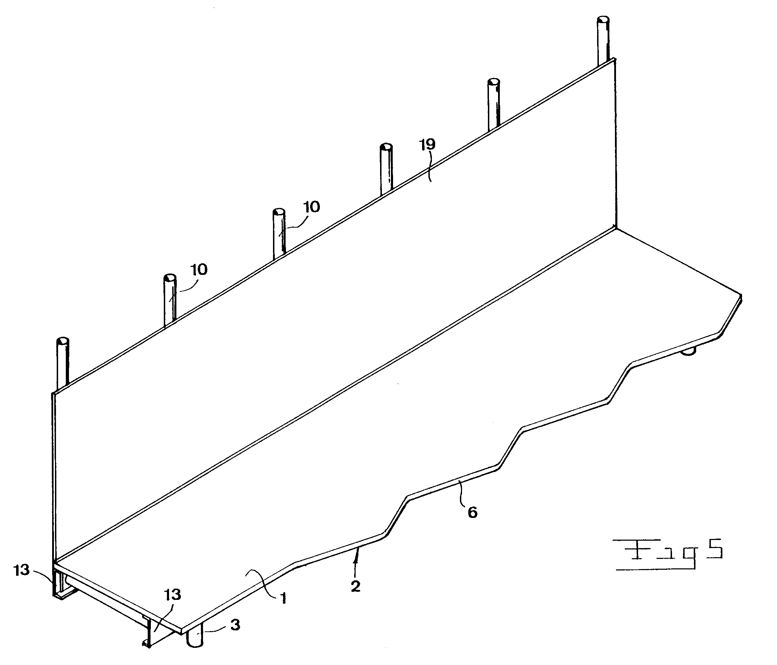

The support arrangement 2 illustrated in Figs 4 and 5 is intended to be adapted to arrange four power means at the corners of the support arrangement. However, it is remarked that the support arrangement may be arranged to at the same time carry a substantially greater number of animals and it may in such a case be suitable to increase the number of power means.

The standing surface is in the example formed by elements 14 arranged on the beams 13 and forming a deck and a surface layer 15 arranged on these elements, for instance of aluminium plate. It is suitable that the standing surface slopes away from the rear edge 6 and accordingly in the direction towards the front edge 5, so that when clean flushing of the standing surface 1 is carried out the dirt water tends to flow away from the standing surface edge 6, at which the milking equipment (not shown here) is intended to be arranged.

The guide means or sleeves 10 are, as appears most clearly from Figs 3 and 4, secured to one of the beams 13 by welding, bolt connection or in another arbitrary way. It is illustrated in the example how plates are attached to the means or sleeves 10, through which bolts are intended to extend and these bolts are then intended to pass through the web of the adjacent beam too.

Wall forming elements 19 of sheet character are illustrated as being a part of the vertical leg of the support arrangement 2 and these sheet elements 19, for instance plywood sheets, are in the example attached to the means or sleeves 10.

The arrangements 9 restricting the movements of the animals forwardly have in the example the character of a front tube construction, which is secured to the wall elements 19 or means or sleeves 10 by means of bracket-like plugs 20.

As it appears from Figs 1 and 2, the arrangements 7 restricting the movements of the animals rearwardly and to some degree also laterally have a zigzag shape essentially corresponding to the zigzag shape of the rear edge 6 of the standing surface. Means 21 are suspended in the arrangements 7 so as to assist in fixing the animals in their milking positions. These means 21 have in the example the character of pivotable arcs or curves, which in co-operation with the zigzag shaped arrangements 7 form spaces receiving the rear parts of the animals and so dimensioned that the animals substantially may not move laterally with their rear portions. Thus, expressed in another way the animals are fixed with their rear portions, so that the animals may not disturb the milking operation by unacceptable movements. A door 22 is located at the exit end of the support arrangement, which in closed position (Figs 1 and 2) has as the purpose to put the animal located closest obliquely in the correct, i.e. oblique, angle with respect to the longitudinal direction of the support arrangement. The door 22 is pivotably suspended and allows in the open position the animals to leave the support arrangement.

One fixing means 21 for each animal has been illustrated in the example. However, it is normally sufficient that one single fixing means is present, namely for the last animal in the row.

The procedure when using the device according to the invention is as follows: the support arrangement 2 is initially lowered to the lowest position thereof by maximum contracting or compressing the power means 3. With the door 22 in the closed position the animals are gradually driven up onto the support arrangement 2, the end located to the right in Figs 1 and 2 being intended to be the entrance end. When the animals have reached their appropriate positions they are fixed by means of the arc or arcs 21. When all the animals are located on the support arrangement 2 the operator actuates a suitable control equipment which takes care of the supply of pressurized fluid to the power means 3, so that these start to lift the whole support arrangement with the movement restricting arrangements 7, 9 attached thereto and the animals standing on the standing surface 1. The operator continues the lifting until the animals are located at the level most comfortable for milking and then stops the supply of pressurized fluid to the power means 3. The operator then starts the milking work, which easily may be achieved by the milking equipment not shown in the Figures, since the animals are fixed on the support arrangement and are extremely well accessible by the zigzag shape of the rear edge 6 of the standing surface 1 and the arrangements 7 restricting the movements of the animals rearwardly. When the milking work is ended the operator lowers the entire support arrangement 2 to the lowest position thereof and opens the door 22, so that the animals may leave the support arrangement 2.

The comparatively long means or sleeves 10 telescopically functioning along the posts or columns 11 assist in avoiding uneven load of the power means 3 and furthermore avoid that the plate form gets into an inclining position in case of a breakdown of any or some of the power means 3. By arranging the guide means or sleeves 10 merely at one longside of the standing surface 1 they will however in the practice not act movement restricting or obstructing to the milking person.

## Claims

1. A device for facilitating milking of animals, comprising a standing surface (1) for the animals, the standing surface (1) being arranged on a vertically adjustable support arrangement (2) provided with means (3) for vertically adjusting the support arrangement to a level suitable for milking,
**characterized** in that the standing surface (1) has an elongated form and is adapted to receive several animals, that the standing surface is coordinated with arrangements (7, 9, 22) restricting the movements of the animals and arranged to make the animals stand side by side and obliquely with respect to the longitudinal direction of the standing surface (1) in their milking positions, and that the vertically adjusting means (3) are adapted to lift the whole support arrangement (2) with the movement restricting arrangements (7, 9, 22) attached thereto and the animals standing on the standing surface (1) from a lowest position, in which the animals may enter and leave the support arrangement (2), until the animals are located at a level most comfortable for milking.

2. A device according to claim 1, **characterized** in that the standing surface (1) has a front edge (5) and a rear edge (6), that the animals in their positions intended for milking have their rear parts closest to the rear edge (6), that arrangements (7) restricting the movements of the animals rearwardly are arranged above the standing surface (1) in the region of the rear edge (6) thereof, and that there is a free space (8) between the standing surface (1) and the movement restricting arrangements (7) located thereabove enabling a good accessibility to the teats of the animals.

3. A device according to claim 1 or 2,
**characterized** in that the rear edge (6) of the standing surface (1) has a zigzag shape.

4. A device according to claim 3, **characterized** in that the arrangements (7) restricting the movements of the animals rearwardly and to some degree also sidewardly have a zigzag shape essentially corresponding to the zigzag shape of the rear edge (6) of the standing surface (1).

5. A device according to any of the preceding claims,
**characterized** in that vertically adjusting means (3) located at least in the region of the portion of the standing surface located at the rear parts of the animals are arranged at a level below the standing surface (1) so as to influence the support arrangement (2) there.

6. A device according to any of the preceding claims,
**characterized** in that the support arrangement (2) has a substantially L-shape as seen laterally or in vertical cross section, and that the standing surface (1) forms the upper surface of a substantially horizontal leg of said L.

7. A device according to claim 6, **characterized** in that a substantially vertical leg of said L comprises guide means (10) displaceable along posts or columns (11).

8. A device according to claim 6, **characterized** in that a substantially vertical leg of said L functions as carrier for means (12) which in their turn constitute carriers of arrangements (7) restricting the movements of the animals rearwardly.

9. A device according to claim 8, **characterized** in that arrangements (9) restricting the movements of the animals forwardly are also mounted on the substantially vertical leg of said L.

10. A device according to any of the preceding claims,
**characterized** in that the support arrangement (2) comprises at least two longitudinal beams (13), on which elements (14, 15) forming the standing surface (1) are applied, and stiffening means (16) extending between these beams, and that the vertically adjusting means act between an underlayer (17) and these beams (13) or components (18) secured thereto.

11. A device according to any of the preceding claims,
**characterized** in that the vertically adjusting means (3) are constituted by piston cylinder mechanisms with multi-step pistons.

12. A device according to claims 7 and 8,
**characterized** in that the carrying means (12) are secured to the guide means.

## Patentansprüche

1. Vorrichtung, um das Melken von Tieren zu vereinfachen, mit einer Standfläche (1) für die Tiere, wobei die Standfläche (1) auf einer in senkrechter Richtung einstellbaren Aufnahmeanordnung (2) angeordnet ist, die mit Einrichtungen (3) ausgestattet ist, um die Aufnahmeanordnung in senkrechter Richtung auf eine zum Melken geeignete Höhe einzustellen,
dadurch gekennzeichnet, daß die Standfläche (1) eine längliche Form aufweist und dazu eingerichtet ist, mehrere Tiere aufzunehmen, daß der Standfläche Einrichtungen (7, 9, 22) zugeordnet sind, die die Bewegungen der Tiere beschränken und angeordnet sind, um die Tiere zu veranlassen, nebeneinander und zu der Längsrichtung der Standfläche (1) schräg in ihren Melkstellungen zu stehen, und daß die Einrichtungen (3) zum Einstellen in senkrechter Richtung dazu eingerichtet sind, die ganze Aufnahmeanordnung (2) mit den daran angebrachten Bewegungsbeschränkungseinrichtungen (7, 9, 22) und den auf der Standfläche (1) stehenden Tieren von einer niedrigsten Stellung, in der die Tiere die Aufnahmeanordnung (2) betreten und verlassen können, anzuheben, bis sich die Tiere in einer Höhe befinden, die zum Melken am bequemsten ist.

2. Vorrichtung nach Anspruch 1, dadurch gekennzeichnet, daß die Standfläche (1) einen vorderen Rand (5) und einen hinteren Rand (6) hat, daß die Tiere in ihren zum Melken vorgesehenen Stellungen ihre hinteren Körperteile dem hinteren Rand (6) am nächsten haben, daß Einrichtungen (7), die die Bewegungen der Tiere nach hinten beschränken, über der Standfläche (1) in dem Bereich ihres hinteren Randes (6) angeordnet sind, und daß zwischen der Standfläche (1) und den darüber befindlichen Bewegungsbeschränkungseinrichtungen (7) ein Freiraum (8) ist, der eine gute Zugänglichkeit zu den Zitzen der Tiere ermöglicht.

3. Vorrichtung nach Anspruch 1 oder 2,
dadurch gekennzeichnet, daß der hintere Rand (6) der Standfläche (1) eine Zick-Zack-Form aufweist.

4. Vorrichtung nach Anspruch 3, dadurch gekennzeichnet, daß die Einrichtungen (7), die die Bewegungen der Tiere nach hinten und in gewissem Maße auch nach der Seite beschränken, eine Zick-Zack-Form aufweisen, die im wesentlichen der Zick-Zack-Form des hinteren Randes (6) der Standfläche (1) entspricht.

5. Vorrichtung nach einem der vorhergehenden Ansprüche, dadurch gekennzeichnet, daß Einrichtungen (3) zum Einstellen in senkrechter Richtung, die zumindest in dem Bereich des bei den hinteren Körperteilen der Tiere befindlichen Abschnitts der Standfläche abgeordnet sind, in einer Höhe unter der Standfläche (1) angeordnet sind, um die Trageeinrichtung (2) dort zu beeinflussen.

6. Vorrichtung nach einem der vorhergehenden Ansprüche, dadurch gekennzeichnet, daß die Aufnahmeanordnung (2), seitlich oder im senkrechten Querschnitt gesehen, im wesentlichen eine L-Form aufweist, und daß die Standfläche (1) die Oberseite eines im wesentlichen waagrechten Schenkels des L bildet.

7. Vorrichtung nach Anspruch 6, dadurch gekennzeichnet, daß ein im wesentlichen senkrechter Schenkel des L Führungseinrichtungen (10) aufweist, die an Stützen oder Säulen (11) verschiebbar sind.

8. Vorrichtung nach Anspruch 6, dadurch gekennzeichnet, daß ein im wesentlichen senkrechter Schenkel des L als Träger für Einrichtungen (12) wirkt, die ihrerseits Träger für Einrichtungen (7) bilden, die die Bewegungen der Tiere nach hinten beschränken.

9. Vorrichtung nach Anspruch 8, dadurch gekennzeichnet, daß auch Einrichtungen (9), die die Bewegungen der Tiere nach vorn beschränken, an dem im wesentlichen senkrechten Schenkel des L angebracht sind.

10. Vorrichtung nach einem der vorhergehenden Ansprüche, dadurch gekennzeichnet, daß die Aufnahmeanordnung (2) zumindest zwei Längsträger (13) aufweist, auf die die Standfläche (1) bildende Elemente (14, 15) aufgebracht sind, und Versteifungseinrichtungen (16), die sich zwischen diesen Trägern erstrecken, und daß die Einrichtungen zum Einstellen in senkrechter Richtung zwischen einer Unterlage (17) und diesen Trägern (13) oder an diesen befestigten Bauteilen (18) wirken.

11. Vorrichtung nach einem der vorhergehenden Ansprüche, dadurch gekennzeichnet, daß die Einrichtungen (3) zum Einstellen in senkrechter Richtung durch Kolben-Zylinder-Mechanismen mit Mehrstufenkolben gebildet sind.

12. Vorrichtung nach Ansprüchen 7 und 8,
dadurch gekennzeichnet, daß die Trageeinrichtungen (12) an den Führungseinrichtungen befestigt sind.

## Revendications

1. Dispositif pour faciliter la traite de bêtes, comportant une aire de stationnement (1) pour les bêtes, l'aire de stationnement (1) étant disposée sur un support (2) déplaçable verticalement, équipé de moyens (3) pour régler verticalement le support à un niveau approprié pour la traite, caractérisé en ce que l'aire de stationnement (1) présente une forme allongée et est apte à recevoir plusieurs bêtes, en ce que l'aire de stationnement est associée à des agencements (7, 9, 22) limitant les mouvements des bêtes et conçus pour que les bêtes stationnent côte à côte et obliquement par rapport à la direction longitudinale de l'aire de stationnement (1) dans leurs positions de traite, et en ce que les moyens réglables verticalement (3) sont aptes à élever la totalité du support (2) avec les agencements limitant le mouvement (7, 9, 22) fixés à celui-ci et les bêtes stationnant sur l'aire de stationnement (1) depuis une position la plus basse, dans laquelle les bêtes peuvent entrer dans et quitter le support (2), jusqu'à ce que les bêtes se trouvent placées à un niveau le plus confortable pour la traite.

2. Dispositif selon la revendication 1, caractérisé en ce que l'aire de stationnement (1) possède un bord antérieur (5) et un bord postérieur (6), en ce que les bêtes, dans leurs positions prévues pour la traite ont leurs parties postérieures les plus proches du bord postérieur (6), en ce que les agencements (7) limitant les mouvements des bêtes vers l'arrière sont disposés au-dessus de l'aire de stationnement (1) dans la région du bord postérieur (6) de celle-ci et en ce qu'il existe un espace libre (8) entre l'aire de stationnement (1) et les agencements de limitation de mouvement (7) disposés au-dessus, permettant un accès satisfaisant aux pis des bêtes.

3. Dispositif selon la revendication 1 ou 2, caractérisé en ce que le bord postérieur (6) de l'aire de stationnement (1) présente une forme en zigzag.

4. Dispositif selon la revendication 3, caractérisé en ce que les agencements (7), limitant les mouvements des bêtes vers l'arrière et dans une certaine mesure également latéralement, possèdent une forme en zigzag correspondant sensiblement à la forme en zigzag du bord postérieur (6) de l'aire de stationnement (1).

5. Dispositif selon l'une quelconque des revendications précédentes, caractérisé en ce que des moyens réglables verticalement (3), situés au moins dans la région de la partie de l'aire de stationnement disposée près des parties postérieures des bêtes, sont situés à un niveau inférieur à l'aire de stationnement (1) de manière à influencer le support (2) en cet endroit.

6. Dispositif selon l'une quelconque des revendications précédentes, caractérisé en ce que le support (2) présente une forme sensiblement en L en vue latérale ou en section transversale verticale, et en ce que l'aire de stationnement (1) constitue la surface supérieure d'une branche sensiblement horizontale dudit L.

7. Dispositif selon la revendication 6, caractérisé en ce qu'une branche sensiblement verticale dudit L comporte des moyens de guidage (10) déplaçables sur des montants ou des colonnes (11).

8. Dispositif selon la revendication 6, caractérisé en ce qu'une branche sensiblement verticale dudit L joue le rôle de support pour des moyens (12) qui, à leur tour, constituent des supports d'agencements (7) limitant les mouvements des bêtes vers l'arrière.

9. Dispositif selon la revendication 8, caractérisé en ce que des agencements (9) limitant les mouvements des bêtes vers l'avant sont également montés sur la branche sensiblement verticale dudit L.

10. Dispositif selon l'une quelconque des revendications précédentes, caractérisé en ce que le support (2) comporte au moins deux poutres longitudinales (13), sur lesquelles sont fixés des éléments (14, 15) constituant l'aire de stationnement (1) et des moyens de renfort (16) s'étendant entre ces poutres, et en ce que les moyens réglables verticalement agissent entre un soubassement (17) et ces poutres (13) ou des éléments (18) fixés à celles-ci.

11. Dispositif selon l'une quelconque des revendications précédentes, caractérisé en ce que les moyens de réglage vertical (3) sont constitués par des mécanismes à vérins équipés de pistons à pas multiples.

12. Dispositif selon les revendications 7 et 8, caractérisé en ce que les moyens de support (12) sont fixés aux moyens de guidage.
